## Europäisches Patentamt

## European Patent Office

## Office européen des brevets

(11) Veröffentlichungsnummer: **0 217 120 B1**

(12) **EUROPÄISCHE PATENTSCHRIFT**

(45) Veröffentlichungstag der Patentschrift:
22.11.90

(51) Int. Cl.⁵: **H04B 3/23**, H03M 1/00

(21) Anmeldenummer: 86111740.6

(22) Anmeldetag: 25.08.86

(54) Schaltungsanordnung zur Echokompensation.

(30) Priorität: 23.09.85 DE 3533902

(43) Veröffentlichungstag der Anmeldung:
08.04.87 Patentblatt 87/15

(45) Bekanntmachung des Hinweises auf die Patenterteilung:
22.11.90 Patentblatt 90/47

(84) Benannte Vertragsstaaten:
AT CH DE FR GB IT LI SE

(56) Entgegenhaltungen:
EP-A- 0 170 224
GB-A- 2 084 824

**IEEE TRANSACTIONS ON COMMUNICATIONS, Band COM-30, Nr. 9, September 1982, Seiten 2095-2108, IEEE, New York, US; O. AGAZZI et al.: "Large-scale integration of hybrid-method digital subscriber loops"**
**IEEE JOURNAL OF SOLID-STATE CIRCUITS, Band SC-20, Nr. 3, Juni 1985, Seiten 671-678, IEEE, New York, US; J.B. HUGHES et al.: "A receiver IC for a 1+1 digital subscriber loop"**
**IEEE JOURNAL OF SOLID-STATE CIRCUITS, Band SC-10, Nr. 6, Dezember 1975, Seiten 371-379, IEEE, New York, US; J.L. McCREARY et al.: "All-MOS charge redistribution analog-to-digital conversion techniques - Part 1"**

(73) Patentinhaber: Siemens Aktiengesellschaft,
Wittelsbacherplatz 2, D-8000 München 2(DE)

(72) Erfinder: Rössler, Bernward, Dipl.-Ing.,
Franz-Reber-Weg 6, D-8000 München 71(DE)

## Beschreibung

Die Erfindung betrifft eine Schaltungsanordnung zur Echokompensation mit einem Netzwerk aus Kondensatoren, die sowohl bei einer Digital-Analog-Wandlung der von einem adaptiven Transversalfilter gelieferten Konpensationssignale, als auch bei der zur Kompensation führenden Überlagerung von zu Analogsignalen gewandelten solchen Kompensationssignalen und der echobehafteten Nutzsignale, als auch bei der nach dem Iterativverfahren abgewickelten Analog-Digital-Wandlung der aufgrund der Kompensation sich ergebenden und ggf. mit einem Restechosignal behafteten, als digitales Korrektursignal dem Transversalfilter zuzuführenden Ergebnissignalen beteiligt sind, deren eine Belegungen, die die Kopfpunkte des Netzwerks bilden, miteinander verbunden sind, die ferner, soweit sie jeweils einem mit einer Gruppe der höherwertigen Bits der zu verarbeitenden Digitalsignale zugeordnet sind, in ihrer Kapazität binär abgestuft sind und deren andere Belegungen, die die Fußpunkte des Netzwerks bilden, wahlweise an Erdpotential oder an ein Bezugspotential gelegt werden können, bzw. soweit sie Bits einer Gruppe der niedrigerwertigen Bits solcher Digitalsignale zugeordnet sind, mit ihren Fußpunkten darstellenden Belegungen wahlweise an Erdpotential oder an einen der Bitkombinationen der zugeordneten niedrigerwertigen Bits entsprechenden Bruchteil dieses Bezugsspannungspotentials gelegt werden können.

Eine Schaltungsanordnung dieser Art (O.E. Agazzi "Large Scale Integration of Hybrid Message Digital Subscriber Loops" Dissertation an der Universität von Californien Berkely vom 20.5.1982) kommt in Anforderungen, die an einen Echokompensator zu stellen sind, schon recht nahe. Zu diesen Anforderungen gehört es, daß wegen der hohen Abtastrate, die das Doppelte der Bitrate der Digitalsignale ist, innerhalb der Zykluszeit von demnach 3,1µs eine möglichst geringe Anzahl aufeinander folgender Vorgänge abzuwickeln ist. Es ist ferner zu fordern, daß der Digital-Analog-Wandler eine monotone Wandlerkennlinie aufweist, die überdies nur geringe Nichtlinearitäten zeigt. Die Auflösung für positive und negative Signalamplituden sollte wenigstens 12 Bit unter Einschluß des Vorzeichenbits betragen, für die Analog-Digital-Wandlung des Restsignals ist für eine geringe Adaptionszeit des Echokompensators noch eine Auflösung von bis zu 8 Bits zu fordern. Abgleichvorgänge, die einen wesentlichen Kostenfaktor darstellen, sollten vermieden sein. Schließlich ist es wünschenswert, daß ein solcher Echokompensator bzw. der Analogteil desselben, zu dem das geschilderte Kondensatornetzwerk gehört, sich mit möglichst geringer Chip-Fläche in CMOS-Technologie realisieren läßt.

Die bekannte Schaltungsanordnung ist, wie angedeutet, im Gegensatz zu anderen bekannten mit Kondensatornetzwerken arbeitenden Schaltungsanordnungen in der Lage, das im Zuge einer Kompensation ggf. verbleibende Restsignal einer A/D-Wandlung zu unterwerfen, um ein digitales Korrektursignal für das Transversalfilter der Komnpensationssohaltung zu erhalten, für welche Eigenschaft ein Zusatzkondensator verantwortlich ist, der nicht wie die übrigen Kondensatoren Bits eines digitalen Signals zugeordnet ist und der eine doppelt so große Kapazität wie die dem höchstwertigen Bit zugeordnete Kondensator aufweist und zur Abspeicherung der Signalspannung dient.

Bei der bekannten Schaltungsanordnung ist, wie angedeutet, an das Kondensatornetzwerk ein Vergleicher in Form eines Operationsverstärkers angeschlossen. Um die Bewertung der Spannungswerte, auf die sich die Kondensatoren des Netzwerkes aufladen, durch diesen Vergleicher von der herstellungsbedingten Offsetspannung des Operationsverstärkers unabhängig zu machen, wird im bekannten Fall die Offsetspannung entweder während der Abtastung der Eingangsspannung des Kondensatornetzwerks, also der echobehafteten Nutzsignalspannung auf den binärgewichteten Kondensatoren des Netzwerks gespeichert, indem Eingang und Ausgang des Operationsverstärkers miteinander verbunden werden, oder aber es wird der Eingang des Vergleichers geerdet und somit die Offsetspannung auf einen Bestandteilen des Vergleichers darstellenden Kondensatoren abgespeichert. Bei den Schaltungen, die hierzu eingesetzt werden, handelt es sich um Transistorschalter. Bei beiden Arten der Berücksichtigung der Offsetspannung wird beim Sperren der betreffenden Schalttransistoren durch die Gate-Drain-Kapazität Ladung abgezogen und damit das Potential Vergleichereingang verändert, was zu fehlerhaften Vergleichsergebnissen führen kann. Auch kapazitive Einkopplungen von Störspannungen auf den Vergleichereingang können zu Störungen führen.

Die Aufgabe der Erfindung besteht daher darin, eine Schaltungsanordnung zur Echokompensation der oben genannten Art dahingehend auszugestalten, daß solche nachteiligen Effekte ausgeschlossen sind.

Erfindungsgemäß wird diese Aufgabe dadurch gelöst, daß das Kondensatornetzwerk einer solchen Schaltungsanordnung aus zwei bezüglich des Aufbaus und der Dimensionierung der Kondensatoren gleichen Hälften besteht, die außer den genannten Kondensatoren jeweils einen Zusatzkondensator mit doppelt so großer Kapazität wie diejenige des Kondensators mit der höchsten binärabgestuften Kapazität, der in derselben Weise schaltbar ist wie die der Gruppe höherwertiger Bits zugeordneten Kondensatoren, sowie einen Abtastkondensator gleichgroßer Kapazität wie diejenige des Zusatzkondensators umfaßt, über den dem Netzwerk die Nutzsignale im einen Fall in Originalform und im anderen Fall hierzu gegenphasig zugeführt werden, bei welchen Netzwerkshälften die Fußpunkte gleichgeordneter Kondensatoren, soweit sie Bits der Gruppe von höherwertigen Bits zugeordnet sind, jeweils entgegengesetzt an Erdpotential oder an Bezugspotential gelegt sind, und daß die Kopfpunkte jeder Netzwerkshälfte mit jeweils einem anderen der beiden Eingänge des zugehörigen Komparators verbunden sind.

Aufgrund des solcher Art symmetrischen Aufbaus des Kondensatornetzwerks wirken sich die erwähnten Störungen nicht auf das Komnpensations-ergebnis aus.

Gemäß einer weiteren Ausgestaltung der Erfindung ist ein zur Weitergabe der kompensierten Analogsignale dienender, aus CMOS-Halbleiterschaltelementen aufgebauter Operationsverstärker mit seinen Eingängen kapazitiv an die Kopfpunkte der Kondensatornetzwerkshälften angekoppelt und weist kapazitive Rückkopplungszweige zwischen seinem Ausgang und den beiden Eingängen auf. Durch diese Schaltmaßnahme ist ein weiteres Problem, das sich aus der Schaltkreisrealisierung in Halbleitertechnik ergibt, nämlich die Notwendigkeit Common-Mode-Anforderungen einhalten zu müssen gelöst, da hier solche Anforderungen entfalllen können. Gleichzeitig läßt sich der solcher Art geschaltete Operationsverstärker als Halteglied ausnützen, das im Zuge des Betriebs einer solchen Echokompensationsschaltung sowieso vorhanden sein müßte.

Nachstehend wird die Erfindung anhand eines Ausführungsbeispiels unter Bezugnahme auf eine Zeichnung näher erläutert, wobei eine Betriebsweise zugrunde gelegt wird, die entsprechend einem anderweitigen Vorschlag sicherstellt, daß Nichtlinearitäten geradzahliger Ordnung und nicht monotones Verhalten am Nullpunkt der Digital-Analog-Wandlerkennlinie infolge von Toleranzen der binärgewichteten Kapazitäten nicht mehr auftreten können.

In der Zeichnung zeigen:

Fig. 1 das allgemeine Blockschaltbild einer Schaltungsordnung zur Echokompensation,

Fig. 2 im wesentlichen das erfindungswgemäß aufgebaute Kondensatornetzwerk einer solchen Schaltungsanordnung.

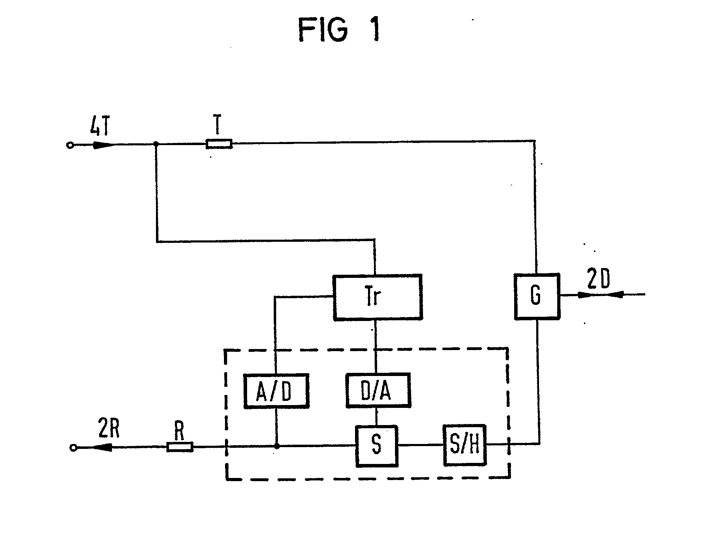

In der Figur 1 sind mit T der im Sendezweig 4T einer Vierdrahtleitung liegende Sendeverstärker und mit R der im Empfangszweig 4R diser Vierdrahtleitung liegende Empfangsverstärker bezeichnet. Die Zweige der genannten Vierdrahtleitung stehen über eine Gabelschaltung G für den Zweidraht-/Vierdrahtübergang mit einer Zweidrahtleitung 2D in Verbindung.

Aufgrund einer nicht ausreichend hohen Gabeldämpfung der Gabelschaltung G kann es dazu kommen, daß auf dem Vierdrahtleitungszweig 4T ankommende Informationen, die für die Weiterübertragung einer Zweidrahtleitung 2D bestimmt sind, zu einem Teil als Echo auf den Empfangszweig 2R der Vierdrahtleitung gelangen, so daß die dort auftretenden Signale ein Gemisch aus Nutzsignalen, die von der Zweidrahtleitung 2D herkommen, und solchen Echosignalen sind.

Der nachfolgend beschriebene Echokompensator dient zur Eliminierung derartiger Echosignale. Er besteht hier aus einem digitalen adaptiven Transversalfilter Tr, das von dem auf dem Sendezweig 4T der Vierdrahtleitung ankommenden und für die Weitergabe auf der Zweidrahtleitung 2D bestimmten Signal beaufschlagt wird, um ein diesem Signal entsprechendes Kompensationssignal als Digitalsignal zu erzeugen. Durch einen Digital-Analog-Wandler D/A wird dieses Kompensationssignal in ein Analogsignal gewandelt. Weiterer Bestandteil des Echokompensators ist ein Abtast- und Haltekreis S/H, der das erwähnte echobehaftete Nutzsignal abtastet. Das vom Abtast- und Haltekreis abgegebene Signal, sowie das in Analogform vorliegende Kompensationssignal werden in einer Subtrahierschaltung S einander derart überlagert, daß der Echoanteil im echobehafteten Nutzsignal kompensiert wird.

Normalerweise ist allerdings das Ausgangssignal der Subtrahierschaltung, das als Empfangssignal an den Empfangsverstärker R und damit an den Empfangszweig 4R der Vierdrahtleitung weitergegeben wird, noch mit einem Restecho behaftet. Es wird daher außerdem einem Analog-Digital-Wandler A/D zugeführt, der dem Transversalfilter ein dementsprechendes Digitalsignal zur Verfügung stellt, das als Korrektursignal für dessen adaptive Einstellung dient und demnach zu einer Korrektur des Kompensationssignals führt.

In der Figur sind der Abtast- und Haltekreis S/H, das Subtrahierglied S, der Digital-Analog-Wandler D/A sowie der Analog-Digital-Wandler als diejenigen Teile des Echokompensators durch eine strichpunktierte Umrahmung gekennzeichnet, deren Funktion bei einem Echokompensator derjenigen Art, von der die Erfindung ausgeht, der also unter Verwendung eines Netzwerks aus binärgewichtigen Kondensatoren aufgebaut ist, durch den Betrieb dieses Kondensatornetzwerks realisiert werden.

Das erfindungsgemäße Kondensatornetzwerk besteht aus zwei Hälften, von denen die eine die Kondensatoren C0o' bis C32o und die andere die Kondensatoren C0u' bis C32u umfaßt. Die beiden Hälften gleichen einander bezüglich des Aufbaus und der Dimensierung der Kondensatoren.

Von den erwähnten Kondensatoren sind die Kondensatoren C1o bis C16o der oberen Hälfte und die Kondensatoren C1u bis C16u der unteren Hälfte den höherwertigen Bits von Digitalsignalen zugeordnet, die im Zuge eines Kompensationskompressors einer Digital-Analog-Wandlung unterworfen werden sollen. Die Kapazität dieser Kondensatoren ist binär abgestuft, ausgehend von den Kondensatoren C1o bzw. C1u also jeweils halb so groß wie die Kapazität des benachbarten Kondensators, hier also des Kondensators C2o bzw. C2u usw. usw..

Die beiden Netzwerkshälften weisen außerdem jeweils einen Zusatzkondensator C32o bew. C32u auf, deren Kapazität doppelt so groß wie diejenige des dem höchstwertigen Bit zugeordneten Kondensators C16o bzw. C16u ist.

Die einen Belegungen der Kondensatoren C1o bis C32o bzw. C1u bis C32u , die die Kopfpunkte der Netzwerkshälften bilden, sind miteinander verbunden. Die anderen Belegungen der Kondensatoren C1o bis C32o bzw. C1u bis C32u, die die Fußpunkte der Netzwerkshälften darstellen, sind über Schalter wahlweise mit Erdpotential oder mit einem Bezugsspannungspotential Vref verbindbar.

Die Kondensatoren C1o' in der oberen Netzwerkshälfte bzw. C1u' in der unteren Netzwerkshälfte sind drei niedrigerwertigen Bits an zu bearbeitenden Digitalsignalen zugeordnet, die in ihrer Wertigkeit auf die erwähnten höherwertigen Bits folgen. Entsprechendes gilt für die Kondensatoren

C0o' die in der oberen Netzwerkshälfte und die Kondensatoren C0u' in der unteren Netzwerkshälfte die den drei niedrigstwertigen Bits der zu verarbeitenden Digitalsignale zugeordnet sind. Das Kapazitätsverhältnis der Kondensatoren C1o' und C0o' beträgt 8/1 , entsprechendes gilt für die entsprechenden Kondensatoren in der unteren Netzwerkshälfte.

Auch bei diesen Kondensatoren sind die einen Belegungen als Kopfpunkte der Netzwerkshälften miteinander und mit den entsprechenden Belegungen der übrigen Kondensatoren verbunden. Ihre Fußpunkte können wahlweise an Erdpotential oder im Falle der Kondensatoren C1o' und C1u' an ein Bezugspotential U3 und im Falle der Kondensatoren C0o' und C0u' an ein Bezugspotential U4 gelegt werden. Die Bezugsptentiale U3 und U4 sind im Gegensatz zum vorerwähnten Bezugspotential Vref kein fester Wert sondern weisen je nach der Wertigkeit der Binärzeichenkombination der zugeordneten niedrigerwertigen Bits unterschiedliche Werte auf, die binär ab gestufte Teile der Bezugsspannung Vref sind. Diese Teilspannungen werden mit Hilfe eines hier nicht dargestellten zwischen der Bezugsspannung Vref und Erdpotential betriebenen Spannungsteilers geliefert, der entsprechend schaltbare Abgriffe aufweist.

Die Kopfpunkte der Kondensatoren in der oberen Netzwerkshälfte sind an einen Abtastkondensator CSo angeschlossen, dessen andere Belegung wahlweise an Erdpotential oder an die Nutzsignalspannung Vin+ gelegt werden kann, also an die Analogspannung, die gem. Fig. 1 einer Analog-/Digital-Wandlung unterzogen werden soll. Entsprechendes gilt für die miteinander verbundenen Kopfpunkte der Kondensatoren der unteren Netzwerkshälfte bez.eines Abtastkondensators CSu, der zwischen Erdpotential und einer Spannung Vin- schaltbar ist, die gegenphasig zu der erwähnten Spanne Vin+ verläuft.

Die Kopfpunkte der Kondensatoren der oberen Netzwerkshälfte sind außerdem an den nicht invertierenden Eingang des Komparators V angeschlossen, die Kopfpunkte der unteren Hälfte des Netzwerks an den invertierenden Eingang dieses Komparators, der, wie noch dargelegt werden wird, im Zusammenhang mit einer nach dem Iterativverfahren durchgeführten Analog-Digital- Wandlung im Zuge des Kompensationsprozesses eine Rolle spielt. Die Ausgänge dieses Vergleichers sind über Schalter S7 bzw. S8 mit den genannten Eingängen verbindbar. Diese Schalter werden während der Abtastung der Eingangsspannung Vin+ bzw. Vingeschlossen, um die Bewertung durch den Vergleicher von dessen herstellungsbedingter Offsetspannung unabhängig zu machen. Ein entsprechender Effekt ließe sich dadurch erreichen, daß die Eingänge des Vergleichers geerdet werden und die Offsetspannung auf einer oder mehreren Bestandteil des Vergleichers darstellende Kondensatoren abgespeichert werden. Die erwähnten Schalter sind durch CMOS-Schalttransistoren realisiert.

An die Kopfpunkte der Netzwerkshälften ist außerdem mit seinen Eingängen ein Operationsverstärker A1 angekoppelt, der die Rolle des Verstärkers R in Fig. 1 übernimmt. Die Ankopplung erfolgt über Schalter S9 und S10, die in der Praxis ebenfalls durch Transistorschalter realisiert sind, so wie über Kondensatoren Ck. Die Schalter S9 und S10 stellen in ihrer anderen Schaltstellung eine Verbindung der Verstärkereingänge mit einem Erdpotential führenden Schaltungspunkt her. Zwischen den Ausgängen des Operationsverstärkers A1 und dessen Eingängen besteht über Kondensatoren Cr eine Rückkopplungsverbindung. Diese Kondensatoren sind durch ebenfalls in Form von Transistorschaltern realisierten Schaltern S11 und S12 überbrückbar. Die Besonderheit der Anschaltung des Verstärkers A1 besteht in der kapazitiven Ankopplung sowie in den rein kapazitiven Rückkopplungszweigen. Der Verstärker kann damit als Halteglied ausgenutzt werden und es ist der im Hinblick auf die Belastung des Kondensatornetzwerks erforderliche niedrige Verstärkungsgrad eingestellt, ohne daß bez. der im Verstärker enthaltene CMOS-Transistoren Common-Mode-Forderungen einzuhalten sind, wie dies bei einer ohmschen Komponente des Rückkopplungszweigs der Fall wäre.

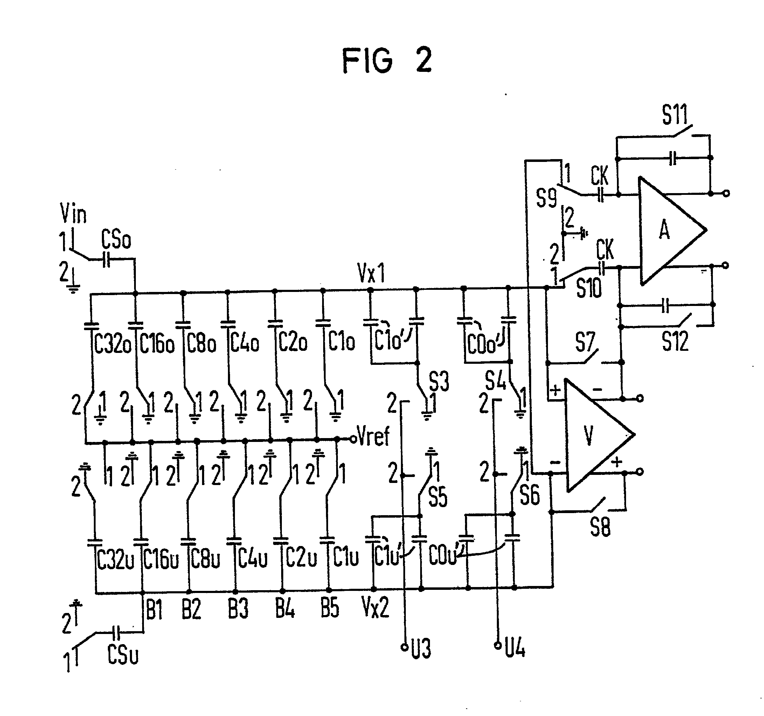

Nachstehend wird auf die Betriebsweise der Schaltungsanordnung gem. Fig. 2 näher eingegangen.

Es wird hierbei zunächst vorausgesetzt, daß ein mit einem positiven Echosignal behaftetes Nutzsignal am Netzwerkseingang Vin+ ansteht.

In einem ersten Zeitschritt, der der Abtastung der Nutzsignalspannung und gleichzeitig der Digital-Analog-Wandlung des Kompensationssignals dient, womit die Funktionen der Schaltungsteile S/H und D/A gem. Fig. 1 realisiert sind, liegen folgende Schalterstellungen vor:

Die Schalter S1 und S2 nehmen die Schaltstellung 1 ein, womit die Nutzsignalspannung Vin+ und Vinauf Kondensatoren des Netzwerks gelangt. Von diesen Kondensatoren sind solche, die den Binärwert 1 aufweisenden Bits des einer Digital-Analog-Wandlung zu unterwerfenden Kompensationssignals zugeordnet sind, mit ihren Fußpunkten an Erdpotential gelegt (Schaltstellung 1 der betreffenden Fußpunktschalter) wogegen solche Kondensatoren, die den Binärwert 0 aufweisenden Bits zugeordnet sind, an die Bezugsspannung Vref gelegt sind (Schaltstellung 2 der Fußpunktschalter). Die Fußpunkte der Kondensatoren C1o' und C0o' liegen im vorausgesetzten Fall positiver Echosignale an Erdpotential (Schaltstellung 1). Die Schalter S7 und S8, sowie S11 und S12 sind geschlossen, die Schalter S9 und S10 legen die Verstärkereingänge des Verstärkers A1 an Erdpotential (Schaltstellung 2).

Die Fußpunkte der Kondensatoren der unteren Netzwerkshälfte soweit sie höherwertigen Bits zugeordnet sind, werden in diesem Zeitschritt jeweils entgegengesetzt an Erdpotential oder an die Bezugsspannung Vref gelegt wie die Fußpunkte der entsprechenden Kondensatoren der oberen Netzwerkshälfte. In Abweichung hiervon nehmen die Fußpunktschalter der Kondensatoren C1u' und C0u' der unterenNetzwerkshälfte dieselbe Schaltstellung wie die entsprechenden Fußpunkschalter der oberen Netzwerkshälfte ein, es liegen diese Fußpunkte also an Erdpotential.

Im zweiten Zeitschritt werden die Fußpunktschalter der Kondensatoren der oberen Netzwerkshälfte an Bezugsspannungspotential Vref geschaltet (Schaltstellung 2), sofern dies nicht schon der Fall ist, der Fußpunktschalter des Kondensators C32o bleibt unverändert an Erdpotential (Schaltstellung 1). Bei den Fußpunkten der Kondensatoren der unteren Netzwrkshälfte sind, soweit es die höherwertigen Bits zugeordneten Kondensatoren betrifft nach dem zweiten Zeitschritt die Fußpunkte an die jeweils andere Spannung als beim entsprechenden Kondensator in der oberen Netzwerkshälfte gelegt. Die Schalter S3 und S5 bzw. S4 und S6 legen am Ende des zweiten Zeitschritts die entsprechenden Fußpunkte an Erdpotential.Die Fußpunkte der Kondensatoren C1o', C0o', C1u' und C0o' liegen an Erdpotential.

An den Kopfpunkten der Kondensatoren der oberen Netzwerkshälfte herrscht danach eine Spannung Vx1 und an den Kopfpunkten der Kondensatoren der unteren Netzwerkshälfte eine gleich große Spannung Vx2, wobei gilt Vx1 = -Vx2.

Für die Kompensation eines positiven Echos ergibt sich demnach Vx1 + Vx2 = (-Vin.C32' + 2Vref (B1.C16 + B2.C8 + + B3.C4 + B4.C2 + B5.C1) + 2U3.C1' + 2U4.C0') : CT wobei mit CT die Summe der Kapazität aller Kondensatoren einer Netzwerkshälfte bezeichnet ist.

Bei der Kompensation negativer Echos wird mit vertauschten Schalterstellungen gearbeitet. Das bedeutet, daß in der oberen Netzwerkshälfte die Fußpunkte derjenigen Kondensatoren, die Bits mit dem Binärwert 1 zugeordnet sind, an die Bezugsspannung Vref gelegt sind, wogegen die Fußpunkte von den Binärwert 1 aufweisenden Bits zugeordneten Kondensatoren an Erdpotential gelegt sind. Die Fußpunkte der Kondensatoren C1o' und C0o' liegen an den Bezugsteilspannungen U3 und U4. Bei der unteren Netzwerkshälfte verbinden die Schalter S5 und S6 mit Erdpotential, bei den Fußpunkten der höherwertigen Bits zugeordneten Kondensatoren C1u bis C16u liegen entsprechend vertauschte Verhältnisse vor. Der Zusatzkondensator C32o der oberen Netzwerkshälfte liegt im ersten Zeitschritt an der Bezugsspannung Vref, der zur unteren Netzwerkshälfte gehörende Zusatzkondensator C32u an Erdpotential.

Im zweiten Zeitschritt liegen im diskutierten Fall negativer Echos an den Fußpunktschalter der Kondensatoren C1o bis C16o an Erdpotential, die Fußpunktschalter der entsprechenden Kondensatoren der unteren Netzwerkshälfte an der Bezugsspannung Vref. Die Schalterstellung der Schalter an den Fußpunkten C32o und C32u bleibt unverändert. Demnach gilt für negative Echos Vx1 + Vx2 = (+2Vin.C32' - 2Vref (B1.C16 + B2.C8 + B3.C4 + B4.C2 + B5.C1) - 2U3.C1' - U4.C0') : CT.

Da die Beiträge zu einer positiven Echokompensationsspannung den gleichen Kondensatoren geliefert werden wie die Beiträge zu einer negativen Echokompensationsspannung sind diese unabhängig von Toleranzen der Kapazitätsverhältnisse zwangsläufig einander gleich. Die D/A-Wandlerkennlinie ist demnach nullpunktsymmetrisch und Nichtlinearitäten geradzahliger Ordnung können nicht auftreten. Das monotone Verhalten ist weitgehend ungestört, da die Kondensatoren C32o und C32u nicht aktiv am Wandlungsprozeß beteiligt sind.

Ein dritter Zeitschritt beim Betrieb des erfindungsgemäßen Kondensatornetzwerks ist Bestandteil der Analog-Digital-Wandlung des nach der Kompensation verbliebenen Restsignals und dient insbesondere der Bestimmung des Vorzeichens dieses Restsignals. Hierzu wird, um Quantisierungsfehler zu verringern im Falle eines positiven Echos der Fußpunkte der Kondensatoren C1o' an die Bezugsspannung U3 und der Fußpunkt der Kondensatoren C0o' an die Bezugsspannung U4 gelegt, wobei der Bruchteil der Bezugsspannung Vref, den diese Spannungen U3 und U4 darstellen durch eine durch die sechs niedrigstwertigen Bits gebildete Zufallsadresse bestimmt wird. Die Fußpunkte der entsprechenden Kondensatoren C1u' und C0u' in der unteren Netzwerkshälfte sind durch die Schalter S5 und S6 an Erdpotential gelegt. Ebenfalls entsprechend einer Zufallsadresse werden einzelne Fußpunkte der höherwertigen Bits zugeordneten Kondensatoren der oberen Netzwerkshälfte an die Bezugsspannung Vref gelegt, wogegen die Fußpunkte der entsprechenden Kondensatoren in der unteren Netzwerkshälfte an Erdpotential gelegt werden. Diese Prozedur wird auch als "dithering" bezeichnet.

Liegt, wie vorausgesetzt, ein positives zu kompensierendes Echo vor und ist die Summe der nach der Kompensation verbleibenden Restsignalspannung und der sich aufgrund des dithering ergebenden zusätzlichen Ladespannung am Ende des dritten Zeitschritts positiv, dann wird der Fußpunktschalter des dem höchstwertigen Bit zugeordneten Kondensators C16o in der oberen Netzwerkshälfte von der Bezugsspannung Vref an Erdpotential umgeschaltet und umgekehrt beim entsprechenden Kondensator C16u in der unteren Netzwerkshälfte eine Umshcaltung von Erdpotential an Bezugsspannungspsotential Vref in einem vierten Zeitschritt vorgenommen. Ist am Ende dieses vierten Zeitschritts die genannte Summenspannung immer noch positiv, dann verbleiben Fußpunktschalter der Kondensatoren C16o und C16u in der im vierten Zeitschritt eingestellten Stellung. Ergibt sich jedoch am Ende des vierten Zeitschritts, daß die Summenspannung negativ ist, so werden beide Fußpunktschalter der Kondensatoren C16o und C16u wieder zurück gestellt.

In einem Zeitschritt 5 bzw. in wieteren nachfolgenden Zeitschritten wird nacheinander entsprechend mit den jeweils in der Wertigkeit nächstliegenden Kondensatoren verfahren.

Der erläuterten Betrtiebsweise liegt das Prinzip zugrunde, daß im Falle einer Überkompensation, also bei positivem Echosignal und sich ergebender positiver Summenspannung oder bei negativem Echo und sich ergebender negativer Summenspannung die Kondensatoren C32o,C32u an den Wandlungsvorgängen nicht beteiligt sind. Im Falle einer Unterkompensation, d.h. also bei positivem Echo und sich ergebender negativer Summenspannung oder bei negativem Echo und sich ergebender positiver Summenspannung sind die Kondensatoren C32o und C32u in beiden Fällen in gleicher Weise beteiligt. Das hat zur Folge, daß bei der Analog-Digital-Wandlung keine Nichtlinearitäten geradzahliger Ordnung auftreten.

Die eingangs geschilderten Einflüsse von Kapazitäten der Schalter S7, S8, S11 und S12 kompensieren sich wegen des symmetrischen Aufbaus des Kondensatornetzwerks und können damit das Kompensationsergebnis nicht beeinflussen.

## Patentansprüche

1. Schaltungsanordnung zur Echokompensation mit einem Netzwerk aus Kondensatoren, die sowohl bei einer Digital-Analog-Wandlung der von einem adaptiven Transversalfilter gelieferten Kompensationssignale, als auch bei der zur Kompensation führenden Überlagerung von zu Analogsignalen gewandelten solchen Kompensationssignalen und der echobehafteten Nutzsignale, als auch bei der nach dem Iterativverfahren abgewickelten Analog-Digital-Wandlung der aufgrund der Kompensation sich ergebenden und ggf. mit einem Restechosignal behafteten als digitales Korrektursignal dem Transversalfilter zuzuführenden Ergebnissignalen beteiligt sind, deren eine Belegungen, die die Kopfpunkte des Netzwerks bilden, miteinander verbunden sind, die ferner, soweit sie jeweils einem Bit einer Gruppe der höherwertigen Bits der zu verarbeitenden Digitalsignale zugeordnet sind, in ihrer Kapazität binär abgestuft sind und deren andere Belegungen, die die Fußpunkte des Netzwerks bilden, wahlweise an Erdpotential oder an Bezugspotential gelegt werden können, bzw. soweit sie Bits einer Gruppe der niedrigerwertigen Bits solcher Digitalsignale zugeordnet sind, mit ihren Fußpunkte darstellenden Belegungen wahlweise an Erdpotential oder an einen der Bitkombinationen der zugeordneten niedrigerwertigen Bits entsprechenden Bruchteil dieses Bezugsspannungspotentials gelegt werden können, dadurch gekennzeichnet, daß das Kondensatornetzwerk aus zwei bezüglich des Aufbaus und der Dimensinierung der Kondensatoren (C0o', C1o'... C32o, CSo; C0u', C1u'...C32u, CSu) gleichen Hälften besteht, die außer den genannten Kondensatoren jeweils einen Zusatzkondensator (C32o, C32u) mit doppelt so großer Kapazität wie diejenige des Kondensators (C16o, C16u) mit der höchsten binärabgestuften Kapazität, der in derselben Weise schaltbar ist, wie die der Gruppe höherwertiger Bits zugeordneten Kondensatoren, sowie einen Abtastkondensator (CSo, CSu) gleich großer Kapazität wie diejenige des Zusatzkondensators umfaßt, über den dem Netzwerk die Nutzsignale im einen Fall in Originalform und im anderen Fall hierzu gegenphasig zugeführt werden, bei welchen Netzwerkshälften die Fußpunkte gleich geordneter Kondensatoren, soweit sie Bits der Gruppe von höherwertigen Bits zugeordnet sind, jeweils entgegengesetzt an Erdpotential oder an Bezugspotential gelegt sind, und daß die Kopfpunkte jeder Netzwerkshälfte mit jeweils einem anderen der beiden Eingänge des zugehörigen als Operationsverstärker ausgebildeten Komparators (V) verbunden sind, dessen Ausgänge mittels jeweils eines Halbleiterschalters (S7, S8) mit jeweils einem anderen der Eingänge verbindbar sind.

2. Schaltungsanordnung nach Anspruch 1, dadurch gekennzeichnet, daß ein zur Weitergabe der kompensierten Analogsignale dienender, aus CMOS Transistoren aufgebauter Operationsverstärker A1 mit seinen Eingängen kapazitiv (Ck) an die Kopfpunkte der Kondensatornetzwerkshälften angekoppelt ist und rein kapazitive Rückkopplungszweige zwischen seinem Ausgang und den beiden Eingängen aufweist.

3. Schaltungsanordnung nach Anspruch 2, dadurch gekennzeichnet, daß die Kondensatoren in den Rückkopplungswegen des Operationverstärkers (A1) durch Halbleiterschalter (S11, S12) überbrückbar sind, und daß dessen Eingänge von den Kopfpunkten des Kondensatornetzwerks ebenfalls mit Hilfe von Halbleiterschaltern (S9, S10) auf einen Erdpotential führenden Schaltungspunkt umschaltbar sind.

## Claims

1. Echo canceller circuitry including a network of capacitors, which take part both in the case of a digital to analog conversion of the compensation signals supplied by an adaptive transversal filter, and in the case of the superimposition, which leads to compensation, of such compensation signals converted to analog signals and of the echo-laden wanted signals, and in the case of the analog to digital conversion, executed by the iterative method, of the resulting signals, which arise from the compensation and may be laden with a residual echo signal and are to be supplied to the transversal filter as a digital correction signal, the plates of which capacitors that form the high ends of the network being connected to one another, which capacitors, furthermore, insofar as they are correlated in each case with a bit of a group of the more significant bits of the digital signals to be processed, are binary-stepped in their capacitance, and the other plates of which capacitors that form the low ends of the network being capable of connection selectively to ground potential or to reference potential, or which capacitors, insofar as they are correlated with bits of a group of the less significant bits of such digital signals, can be connected with plates representing their low ends selectively to ground potential or to a fraction of this reference voltage potential corresponding to the bit combinations of the correlated less significant bits, characterized in that the capacitor network consists of two halves which are equal with respect to the construction and dimensioning of the capacitors (C0o', C1o' ... C32o, CSo; C0u', C1u' ... C32u, CSu), which apart from the abovementioned capacitors each comprise an additional capacitor (C32o, C32u) with twice as high a capacitance as that of the capacitor (C16o, C16u) with the highest binary-stepped capacitance, which additional capacitor is switchable in the same manner as the capacitors correlated with the group of more significant bits, as well as a scanning capacitor (CSo, CSu) of the same capacitance as that of the additional capacitor, via which the wanted signals are supplied to the network, in one case in their original form and in the other case in phase opposition thereto, in which network halves the low ends of equi-ordered capacitors, insofar as they are correlated with bits of the group of more significant bits, are connected in each case oppositely to ground potential or to reference potential, and in that the high ends of each network half are connected in each case to another of the two inputs of the respective comparator (V) designed as an operational amplifier, whose outputs are connectable to another of the inputs by means of a semi-conductor switch (S7, S8), in each case.

2. Circuitry according to claim 1, characterized in that an operational amplifier A1 serving to relay the compensated analog signals and constructed from CMOS transistors is coupled by its inputs capacitively (Ck) to the high ends of the capacitor network halves, and has purely capacitive feedback branches between its output and the two inputs.

3. Circuitry according to claim 2, characterized in that the capacitors are bridgeable in the feedback paths of the operational amplifier (A1) by semi-conductor switches (S11, S12), and in that the inputs thereof are switchable from the high ends of the capacitor network to a circuit point carrying ground potential, again with the aid of semi-conductor switches (S9, S10).

## Revendications

1. Montage de compensation d'échos comportant un réseau formé de condensateurs, qui interviennent aussi bien dans le cas d'une conversion numérique/analogique des signaux de compensation délivrés par un filtre transversal adaptatif, que dans le cas de la superposition, conduisant à la compensation, de tels signaux de compensation convertis en signaux analogiques et des signaux utiles affectés d'échos, et que dans le cas de la conversion analogique/numérique, exécutée selon le procédé itératif, des signaux résultants, obtenus sur la base de la compensation, affectés éventuellement d'un signal d'écho résiduel et devant être envoyés en tant que signal numérique de correction au filtre transversal, et dans lequel des premières armatures des condensateurs, qui forment des points de tête du réseau, sont réunies entre elles, et, dans la mesure où les condensateurs sont associés respectivement à un bit d'un groupe des bits de poids maximum des signaux numériques devant être traités, leurs capacités sont étagées selon un échelonnement binaire, et les autres armatures des condensateurs, qui forment les points de base du réseau, peuvent être raccordées au choix au potentiel de masse ou à un potentiel de référence, ou bien, dans la mesure où ils sont associés à des bits d'un groupe des bits de poids minimum de tels signaux numériques, les condensateurs peuvent être placés, par leurs armatures représentant leurs points de base, au choix au potentiel de masse ou à une fraction de ce potentiel de tension de référence, qui correspond à la combinaison des bits associés de poids minimum, caractérisé par le fait que le réseau de condensateurs est constitué de deux moitiés, qui sont identiques en ce qui concerne la constitution et le dimensionnement des condensateurs (C0o', C1o' ... C32o, CSo; C0u', C1u' ... C32u, CSu) et comportent, en dehors des condensateurs indiqués, respectivement un condensateur additionnel (C32o, C32u) possédant une capacité double de celle du condensateur (C16o, C16u) possédant la capacité maximale échelonnée en binaire, qui peut être commuté de la même manière que les condensateurs associés au groupe de bits de poids maximum, ainsi qu'un condensateur d'échantillonnage (CSo, CSu) possédant une capacité identique à celle du condensateur additionnel et au moyen duquel les signaux utiles sont envoyés au réseau, dans un cas avec leur forme initiale et dans l'autre cas avec la phase opposée, les points de base de condensateurs rangés de la même manière étant placés respectivement, d'une manière opposée, au potentiel de masse ou à un potentiel de référence, dans la mesure où ils sont associés à des bits du groupe de bits de poids maximum, et que les points de tête de chaque moitié du réseau sont reliés respectivement à une autre des deux entrées du comparateur associé (V) qui est réalisé sous la forme d'un amplificateur opérationnel et dont les sorties peuvent être raccordées, respectivement au moyen d'un interrupteur à semiconducteurs (S7, S8), à respectivement une autre des entrées.

2. Montage suivant la revendication 1, caractérisé par le fait qu'un amplificateur opérationnel (A1), qui est utilisé pour retransmettre les signaux analogiques compensés et qui est constitué par des transistors CMOS, est accouplé de façon capacitive (Ck), par ses entrées, aux points de tête des moitiés du réseau de condensateurs et comporte des branches de réaction purement capacitives entre sa sortie et les deux entrées.

3. Montage suivant la revendication 2, caractérisé par le fait que les condensateurs situés dans les branches de réaction de l'amplificateur opérationnel (A1) peuvent être shuntés par des interrupteurs à semiconducteurs (S11, S12), et que les entrées de cet amplificateur peuvent être également commutées, à l'aide d'interrupteurs à semiconducteurs (S9, S10), depuis les points de tête du réseau de condensateurs à un point du circuit appliquant le potentiel de masse.

# FIG 1

# FIG 2